# EUROPEAN PATENT SPECIFICATION

(11) **EP 2 207 223 B1**
(45) Date of publication and mention of the grant of the patent: **01.02.2012**
(21) Application number: 10250051.9
(22) Date of filing: 13.01.2010
(51) Int. Cl.: H01M 2/10

(54) **Battery pack**
Batteriepack
Bloc-batteries

(30) Priority: 13.01.2009 US 144397 P; 04.01.2010 US 651973
(43) Date of publication of application: 14.07.2010
(73) Proprietor: Samsung SDI Co., Ltd., Gyeonggi-do (KR)
(72) Inventor: Baek, Mooryong, Yongin-si, Gyeonggi-do (KR)
(74) Representative: Mounteney, Simon James

(56) References cited:
- EP-A1- 0 084 338
- EP-A1- 1 498 964
- GB-A- 2 294 578
- US-A- 4 724 189
- US-A- 5 677 079
- US-A- 5 733 674
- US-A1- 2009 072 785

## Description

### Background of the Invention

### 1. Field of the Invention

The present invention relates to a battery pack.

### 2. Description of the Related Art

A secondary battery often has one unit battery (one bare cell) but may include a plurality of unit batteries in the form of a group battery to constitute a pack according to an external device to which it is applied.

In the latter case, a plurality of unit batteries are positioned in a case assembly, and the case assembly includes an upper case portion and a lower case portion.

Generally, the battery pack is formed by assembling the upper case portion and the lower case portion after positioning the unit batteries in the lower case portion, like for example, in EP0084338.

### Brief Summary of the Invention

The present invention seeks to provide a battery pack that improves the assembling efficiency thereof when a first case portion and a second case portion are coupled to each other.

Accordingly, the invention provides a case for a battery pack as set out in Claim 1. Preferred features of the invention are set out in Claims 2 to 15.

Hence in a battery pack according to the present invention, the first case portion and the second case portion can be easily coupled to each other due to the lesser thickness of the first sub-portion allowing displacement of the first engagement portion during assembly.

### Brief Description of the Drawings

The features and advantages of the present invention will be more apparent from the following detailed description in conjunction with the accompanying drawings, in which:
FIG. 1 is a perspective view of a battery pack according to a first embodiment of the present invention;
FIG. 2 is an exploded perspective vlew of the battery pack according to the first embodiment of the present invention;
FIG. 3 is an exploded perspective view of a case according to the first embodiment of the present invention;
FIG. 4 is a sectional view of the battery pack according to the first embodiment of the present invention;
FIG. 5 is an enlarged view of the battery pack according to the first embodiment of the present invention;
FIG. 6 is an enlarged view of a second embodiment of the invention;
FIG. 7 is an enlarged view of a third embodiment of the invention;
FIG. 8 is an enlarged view of a fourth embodiment of the invention; and
FIG. 9 is an enlarged view of a fifth embodiment of the invention.

### Detailed Description of the Invention

Details of the following embodiments of the present invention are contained herein and in the accompanying drawings. The advantages and characteristics of the present invention and methods for achieving them will be apparent with reference to the embodiments of the present invention that will be described in detail with reference to the drawings. The same reference numerals are used throughout the specification to refer to the same or like elements.

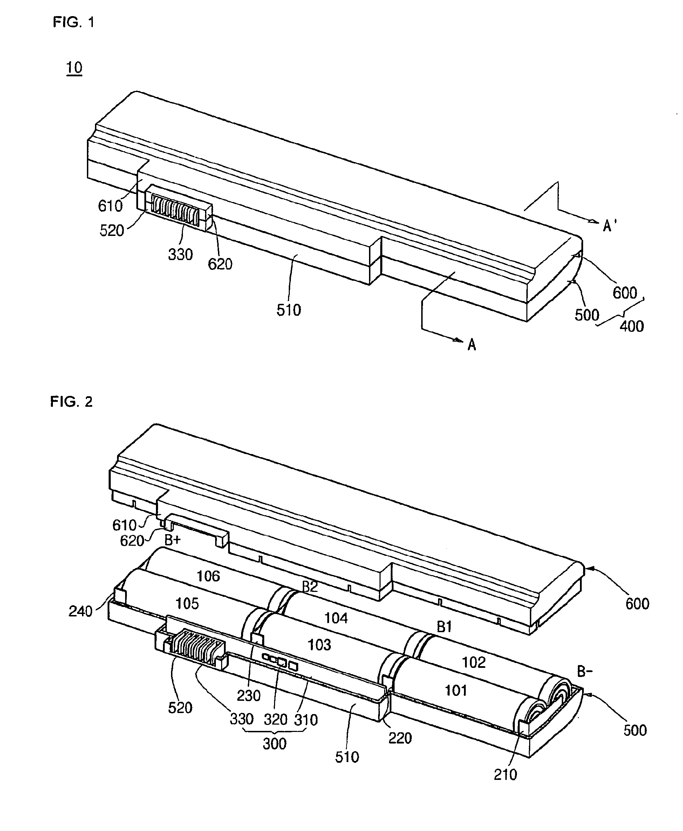

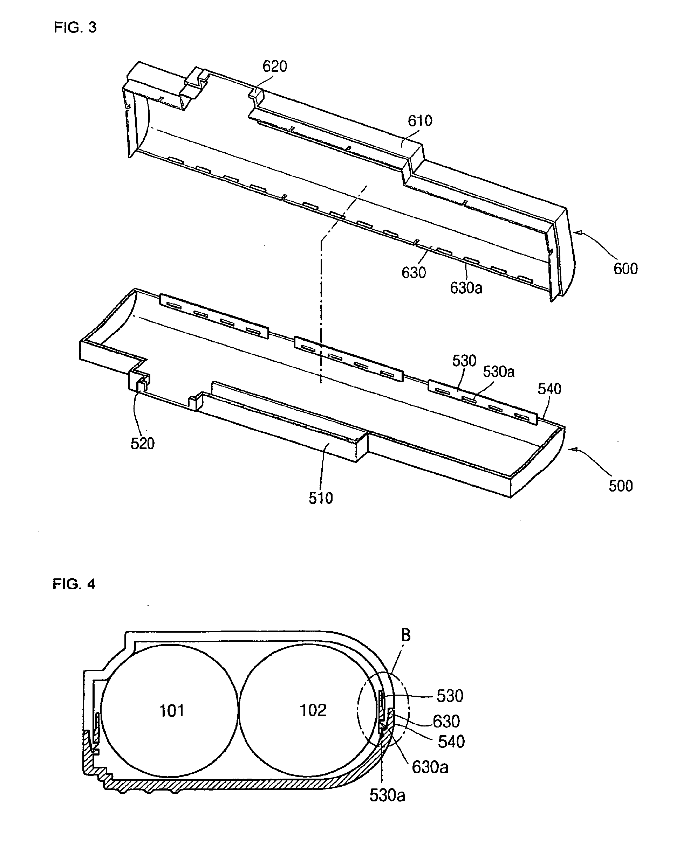

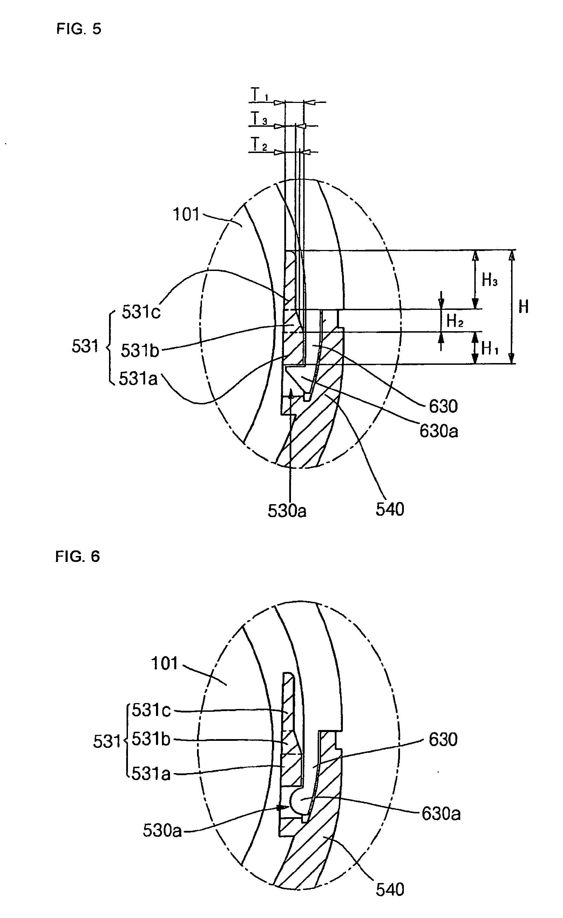

FIGS. 1 and 2 are a perspective view and an exploded perspective view of a battery pack 10 according to a first embodiment of the present invention. FIG. 3 is an exploded perspective view of a case according to the first embodiment of the present invention. FIGS. 4 and 5 are a sectional view and an enlarged view of the battery pack 10 according to the first embodiment of the present invention. FIG. 4 is a sectional view taken along line A-A' of FIG. 1. FIG. 5 is an enlarged view obtained by enlarging a portion B of FIG. 4.

Referring to FIGS. 1 and 2, the battery pack 10 according to the first embodiment of the present invention includes a plurality of bare cells 101, 102, 103, 104, 105, and 106, first to fourth lead plates 210, 220, 230, and 240, a protection circuit module 300, and a case assembly 400. The case assembly 400 includes a first case portion 500 and a second case portion 600. When coupling bosses of the second case portion 600 are coupled to coupling holes of the first case portion 500, the first case portion 500 and the second case 600 can be easily coupled to each other. The coupling bosses are examples of male elements and the coupling holes are examples of female elements in the context of the invention. Other configurations are possible.

Each of the bare cells 101, 102, 103, 104, 105, and 106 includes an electrode assembly (not shown), a can accommodating the electrode assembly, and a cap assembly (not shown) coupled to an opening of the can with the electrode assembly being accommodated in the can. The top surfaces and the bottom surfaces of the bare cells are positive electrode terminals and negative electrode terminals respectively, and have the opposite polarity. The first to sixth bare cells 101, 102, 103, 104, 105 and 106 are illustrated in the drawings. The first bare cell 101 and the second bare cell 102 are connected to each other in parallel to constitute a first bare cell set thereby, the third bare cell 103 and the fourth bare cell 104 are connected to each other in parallel to constitute a second bare cell set thereby, and the fifth bare cell 105 and the sixth bare cell 106 are connected to each other in parallel to constitute a third bare cell set thereby. Here, the first to third bare cell sets are connected to each other in series, and are defined by a 3 series-2 parallel structure for convenience' sake. Although a 3 series-2 parallel structure is illustrated in this embodiment of the present invention, any structure having at least two bare cells is possible within the scope of the present invention.

In FIG. 2, B+ and B- are high current terminals and indicate power sources of opposite ends of the series-parallel structure of the bare cells. B+ is the highest potential terminal as a positive electrode power source and B- is the lowest potential terminal as a negative terminal power source. Hence, the negative electrode terminal of the first bare cell set may be the lowest potential terminal B- and the positive electrode terminal of the third bare cell set may be the highest potential terminal B+.

Of the first to fourth lead plates, the first lead plate 210 and the fourth lead plate 240 are located at the negative electrode terminal B- of the first bare cell set and the positive electrode terminal B+ of the third bare cell set respectively in order to connect the bare cell sets in parallel. The first lead plate 210 and the fourth lead plate 240 have rectangular flat plate structures. The first lead plate 210 is welded to the negative electrode terminal of the first bare cell set, so as to be electrically connected to it, and the fourth lead plate 240 is welded to the positive electrode terminal of the third bare cell set, so as to be electrically connected to it. The first lead plate 210 and the fourth lead plate 240 are made of an electrically conductive metal such as copper, nickel, and aluminum. The first lead plate 210 and the fourth lead plate 240 are electrically connected to a pad (not shown) of the protection circuit module 300 directly or through a separate tab.

The second lead plate 220 and the third lead plate 230 are located between the first bare cell set and the second bare cell set B1 and between the second bare cell set and the third bare cell set B2 respectively, and a plurality of bare cell sets are thereby connected to each other in series and in parallel. The second lead plate 220 and the third lead plate 230 have bent central portions respectively. The second lead plate is welded to the positive electrode terminal of the first bare cell set and the negative electrode terminal of the second bare cell set, so as to be electrically connected to them, and the third lead plate 230 is welded to the positive electrode terminal of the second bare cell set and the negative electrode terminal of the third bare cell set. The second lead plate 220 and the third lead plate 230 may be made of an electrically conductive metal such as copper, nickel, and aluminum. The second lead plate 220 and the fourth lead plate 230 are electrically connected to the pad of the protection circuit module 300 directly or through a separate tab.

The protection circuit module 300 includes a board 310, a protection circuit device 320, a connector 330, and a pad (not shown).

The board 310 is a printed circuit board 310 having a substantially rectangular shape. A conductive metal pattern (not shown) is formed in the board 310, and is electrically connected to the protection circuit device 320, the connector 330, and the pad.

The protection circuit board 320 is located on one surface of the board 310 facing the outside of the battery pack 10, and protects the battery pack 10 by checking information regarding the charge/discharge state of the bare cells, and the current, voltage, temperature of the battery.

The connector 330 is located on one surface of the board 310 facing the outside of the battery pack 10 and is positioned on a positioning portion of the connector 330 of the first case portion 500. The connector 330 functions as an electrical passage connected to an external electronic device.

The pad is located on one surface of the board 310 facing the bare cells and is electrically connected to the first to fourth lead plates 210, 220, 230, and 240.
Referring to FIGS. 3 and 4, the case assembly 400 includes the first case portion 500 in which the bare cells 101, 102, 103, 104, 105, and 106, the lead plates 210, 220, 230, and 240, and the protection circuit module 300 are positioned and the second case portion 600, which cooperates with the first case portion 500 to form a case. A side of the case assembly 400 facing a side on which the connector 330 is formed is defined as a first side and a side of the case assembly 400 on which the connector 330 is formed is defined as a second side.

The first case portion 500 has an open-topped box-like shape for accommodating the bare cells. A protection circuit module positioning section 510 corresponding to the shape of the protection circuit module 300, accommodates the protection circuit module 300 and is formed on the second side of the first case portion 500. A connector positioning section 520 in which the connector 330 of the protection circuit module 300 is positioned is formed in the protection circuit module positioning section 510.

The second case portion 600 is located on the first case portion 500 and related thereto. The second case portion 600 has an open-bottomed box-like shape for accommodating the bare cells. A protection module cover 610 corresponding to the shape of the protection circuit module 300 covers the protection circuit module 300 and is formed on the second side of the second case portion 600. A connector cover 620 in which the connector 330 of the protection circuit module 300 is positioned is formed in the protection circuit module cover 610.

First engagement formations in the form of first ribs 530 are formed on the first or second side of the first case assembly 500. The first ribs 530 are provided with female elements defined by coupling holes 530a. Second engagement formations in the form of ribs 630 are provided with male elements defined by coupling bosses 630a. The coupling bosses 630a are at positions corresponding to the coupling holes 530a and are formed on the first or second side of the second case assembly 600. Although, the coupling holes 530a and the coupling bosses 630a are each formed on a respective one of the first and second sides of the case assembly 400, they may each be formed on both of the first and second sides.

Hereinafter, the manner in which the coupling bosses 630a are coupled to the coupling holes 530a will be described in detail. The structure in which the coupling bosses 630a are coupled to the coupling holes 530a is the same on both of the first and second sides of the case assembly 400. Since the coupling holes 530a and the coupling bosses 630a on the first side of the case assembly 400 are illustrated in more detail, only the structure in which the coupling bosses 630a are coupled to the coupling holes 530a on the first side of the case assembly 400 will be described.

Referring to FIG. 5 together with FIG. 3, in the battery pack 10 according to this embodiment of the present invention, the first ribs 530 have a rectangular shape and are located on the first side of the first case portion 500 and the coupling holes 530a have a rectangular shape and are formed at lower portions of the first ribs 530. Although three first ribs 530 and twelve coupling holes 530a are illustrated in the drawings, the numbers of the first ribs 530 and the coupling holes 530a may be changed according to the number of the bare cells and the size of the case assembly.

The second ribs 630 are located on the first side of the second case portion 600, and the hook-shaped coupling bosses 630a are formed at lower portions of the second ribs 630. The second ribs 630 are accommodated within a channel defined between the first ribs 530 and the outermost wall portion 540 of the first case portion 500. Each of the second ribs 630 has a rectangular shape, and each of the coupling bosses 630a is in the form of a protrusion with a triangular cross-section.

The thickest portions of the coupling bosses 630a are thicker than the width of the channel, in order to prevent separation of the coupling bosses 630a from the coupling holes 530a after the coupling bosses 630a are coupled to the coupling holes 530a. Although three second ribs 630 and twelve coupling bosses 630a are illustrated in the drawings, the numbers of the second ribs 630 and the coupling bosses 630a may be changed according to the number of the bare cells and the size of the case assembly.

Each of the first ribs 530 includes a second sub portion 531 a that accommodates the coupling holes 530a, a first sub portion 531 c at a distal end of the first rib 530 and a third sub portion 531 b located on the upper side of the second sub portion 531 a, whose thickness becomes smaller as it goes toward the inner side of the battery pack 10. The height H1 of a part of the second sub portion 531a that extends above the holes 530a is one third of the entire height H of the part of the first rib 530 that extends above the holes 530a. The sum of the height H2 of the third sub portion 531 b and the height H3 of the first sub portion 531 c makes up the remaining two thirds.

In the first case portion 500 of the battery pack 10 according to this embodiment of the present invention, the outermost wall portion 540 of the first case portion 500 is formed only to the height of the third sub portion 531 b and is not formed in a region corresponding to the first sub portion 531 c.

The effect of this configuration is that the first sub portions 531 c of the first ribs 530 are readily accessible by the coupling bosses 630a, which are not interfered with by the outermost portions of the first case portion 500 when the coupling bosses 630a pass over the first sub portions 531c to be coupled to the coupling holes 530a. Therefore, the first case portion 500 and the second case portion 600 can be smoothly coupled to each other as the coupling bosses 630a are brought towards the third sub portions 531 b.

The thickness of the first rib 530 becomes thinner as it goes from the second sub portion 531a to the first sub portion 531c. In this particular configuration, the thickness T3 of the first sub portion 531 c is 0.35 to 0.45 mm. When the thickness of the first sub portion 531c is smaller than 0.35 mm, the first rib 530 may be broken because it cannot endure the pressure applied when the coupling boss 630a descends while making contact with the first sub portion in order to be coupled to the coupling holes 530a. On the other hand, when the thickness of the first sub portion 531c is larger than 0.45 mm, interference can be generated between the coupling bosses 630a and the first sub portion 531 c as the coupling bosses 630a are coupled to the coupling holes 530a, because the first sub portions 531 c are deflected to the extent that they make contact with the bare cells.

The thickness T2 of the third sub portion 531 b gradually decreases from its end that is situated adjacent the second sub portion 531 a to its end that is located adjacent the first sub portion 531c. As a consequence, when the coupling bosses 630a make contact with the third sub portion 531 b, they bear against an inclined surface. In this embodiment, the inclined bearing surface of the third sub portion has the same inclination as that of surfaces of the coupling bosses 630a making contact with the third sub portion 531 b. Due to this structure, the coupling bosses 630a can pass over the first sub portion 531c easily, and smoothly enter the coupling passage between the second sub portion 531 a and the outermost wall portion 540 of the first case portion 500.

The thickness T1 of the second sub portion 531a is 0.5 to 0.7 mm. As mentioned above, the thickest portions of the coupling bosses 630a are thicker than the channel between the second sub portion 531 a and the outermost wall portion 540 of the first case portion 500, in order to prevent separation of the coupling bosses 630a from the coupling holes 530a after coupling of the coupling bosses 630a to the coupling holes 530a. Accordingly, the separation between the second sub portion 531a and the outermost wall portion 540 of the first case portion 500 is extended by the thickest portions of the coupling bosses 630a when the coupling bosses 630a pass through the channel. When the thickness of the second sub portion 531a is smaller than 0.5 mm, the first rib 530 cannot endure the pressure caused when the coupling bosses 630a enter the channel and may be broken. When the thickness of the second sub portion 531 a is larger than 0.7 mm, it makes contact with the bare cell 101 when it is deflected during insertion of the coupling bosses 630a and hence it cannot be deflected any more and the coupling bosses 630a cannot continue to pass through the channel.

The height H1 of the portion of the second sub portion 531 a that extends above the coupling holes is 2 to 3.5 mm. In the battery pack 10 according to this embodiment of the present invention, the coupling forces between the first case portion 500 and the second case portion 600 can be maintained by not only the coupling structure between the coupling bosses 630a and the coupling holes 530a but also by the frictional forces between the second ribs 630 and the second sub portion 531a and between the second ribs 630 and the outermost wall portion 540 of the first case portion 500. However, when H1 is smaller than 2 mm, the length of the coupling passage between the second sub portion 531 a and the outermost wall portion 540 of the first case portion 500 is reduced, so the area where the second ribs 630 make contact with the walls of the channel is smaller. Accordingly, the coupling force between the first case portion 500 and the second case portion 600 is reduced. On the other hand, when H1 is larger than 3.5 mm, it is more difficult for the coupling bosses 630a to reach the coupling holes 530a, or the first rib 530 or the second rib 630 may be broken due to the frictional forces occurring between the second ribs 630 and the second sub portions 531 a and between the second ribs 630 and the outermost wall portion 540 of the first case portion 500 while the coupling bosses 630a are passing through the channel to couple the coupling bosses 630a to the coupling holes 530a.

In the above described battery pack 10 according to the present invention, when the coupling bosses 630a are coupled to the coupling holes 530a of the first case portion 500, the first case portion 500 and the second case portion 600 can be coupled to each other relatively easily because the thicknesses of the first sub portion 531 c is relatively thin enough to allow deflection without interference with the bare cells, yet the second sub portion 531 a is sufficiently thick to provide structural integrity and resist permanent deformation and/or fracture.

Figure 6 is an enlarged view of a second embodiment of the present invention. This view corresponds generally to Figure 5 of the first embodiment.

With the exception of the features shown in Figure 6, all other features of this embodiment are identical to those of the first embodiment and they will therefore not be discussed further.

The second embodiment differs from the first embodiment in that the shape of the coupling bosses 630a is semicircular in cross-section. This particular profile affords a particularly smooth coupling action between the coupling boss 630a and the first rib 530, because it is less influenced by the relative angles of orientation of the first ribs 530 and the second ribs 630.

For the avoidance of doubt, many other profiles are possible for the coupling bosses 630a. This particular embodiment is illustrated merely as an example of one of these.

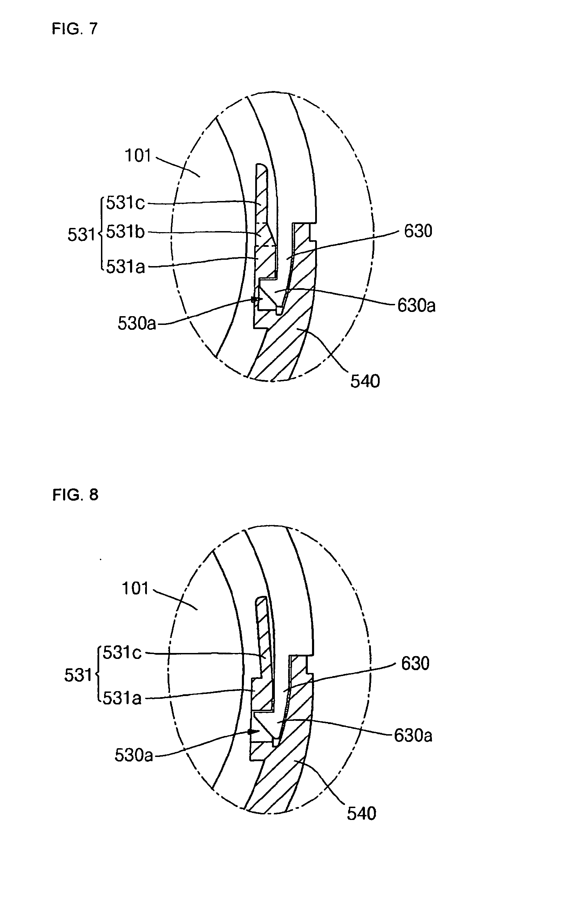

Figure 7 is an enlarged view of a third embodiment of a battery pack in accordance with the invention. This view corresponds generally with Figure 5 of the first embodiment. Except for the specific features illustrated in Figure 7, this embodiment is identical in all other respects to the first embodiment. As a consequence, these common features will not be described again.

The primary difference between the third embodiment and the first embodiment is that the coupling holes 530a of the first embodiment are replaced with coupling recesses 530a. The primary advantage of this embodiment is that the recesses provide greater structural integrity to the first ribs 530.

Figure 8 is an enlarged view of part of a fourth embodiment of the invention. This view corresponds generally with that of Figure 5 of the first embodiment. Except for the differences illustrated in Figure 8, this embodiment is identical in all other respects with the embodiment of Figure 1. The common features will not be discussed in detail again.

The fourth embodiment differs from the first embodiment in that the third sub portion 531 b is omitted and the first sub portion 531 c is directly connected to the second sub portion 531a. The height of the first sub portion 531c is, in this case, extended so as to correspond to the sum of the heights of the first sub portion 531c and the third sub portion 531 b of the first embodiment. In other words, in this embodiment, the first sub portion 531 c has a height of H₃ + H₂. The first sub portion is also somewhat inclined, with the direction of the inclination being generally similar to that of the inclined surface of the third sub portion of the first embodiment. The reason for this is to provide a bearing surface that offers a guiding function to the coupling bosses 630a as they are directed towards the channel. The inclination enables the boundary between the first and second sub portions to be flush, and the inclination also provides some flaring of the entrance to the channel.

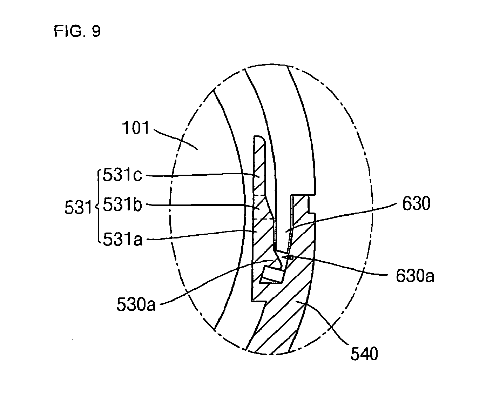

Figure 9 is an enlarged view of a fifth embodiment of the invention. This view corresponds generally with Figure 5 of the first embodiment.
Except for the differences illustrated in Figure 9, this embodiment is identical in all other respects to the first embodiment and the common features will not be described again.

In the embodiment of Figure 9, the positions of the coupling boss and the coupling holes have been reversed. That is to say the first ribs 530 are provided with coupling bosses 530a and the second ribs 630 are provided with coupling holes 630a.

Although embodiments of the present invention have been described in detail hereinabove, it should be understood that many variations and modifications of the basic inventive concept herein described will still fall within the scope of the present invention as defined in the appended claims. In particular the features of the various embodiments can be combined to form further embodiments.

## Claims

1. A case for a battery pack, the said case comprising:
a first case portion (500) provided with a first engagement formation (530), and
a second case portion (600) provided with a second engagement formation (630);
wherein:
the first engagement formation (530) takes the form of a flange situated adjacent a wall portion of the first case portion (500), but spaced therefrom along at least a part of its length, so as to form a channel therebetween;
the second engagement formation (630) projects from the second case portion (600) for location within the channel;
one of the engagement formations (530, 630) is provided with a female element; and
the other of the engagement formations (630, 530) is provided with a male element that is adapted to locate within the female element to join the two case portions together;
**characterised in that**:
the first engagement formation (530) has a first sub portion (531 c) and a second sub portion (531 a) and the second sub portion (531 a) has a thickness that is greater than that of the first sub portion (531c), wherein the first sub portion (531c) is located in a distal region of the first engagement portion (530) and the second sub portion (531a) is located in a basal region of the first engagement portion (530).

2. A case according to claim 1, wherein the first sub portion (531 c) is adapted to guide the second engagement portion (630) towards the channel and the second sub portion (531 a) is adapted to cooperate with the said wall portion in such a manner as to grlp the second engagement portion (630) within the channel.

3. A case according to Claim 1 or 2, wherein the first sub portion (531 c) has a guide surface that is adapted to be contacted by the second engagement formation (630) as the two case portions are assemble together.

4. A case according to claim 3, wherein the guide surface is aligned in a direction that is inclined relative to a plane in which the first and second case portions are joined and extends from the channel towards an inner portion of the first case portion (500).

5. A case according to any preceding claim, wherein the first engagement formation (530) comprises a third sub portion (531 b) located between the first and second sub portions (531 c, 531 a).

6. A case according to claim 5, wherein the third sub portion (531b) has a guide surface that is aligned in an direction that is inclined relative to a plane in which the first and second case portions are joined and extends from the channel towards an inner portion of the first case portion (500).

7. A case according to claim 6, wherein the thickness of the third sub portion (531 b) decreases from an end region thereof located adjacent the second sub portion (531a) to an and region thereof located adjacent the first sub portion (531 c).

8. A case according to any preceding claim, wherein the male element is provided on the second engagement formation (630) and the female element is provided on the first engagement formation (530).

9. A case according to claim 8, wherein the female element is provided in the second sub portion (531 a).

10. A case according to any preceding claim, wherein the female element comprises an opening that extends partially or completely through the engagement formation in which it is situated.

11. A case according to any preceding claim, wherein the male element comprises a protrusion having a profile that comprises a generally triangular, saw-toothed or arcuate component.

12. A case according to any preceding claim, wherein the first sub portion (531 c) has a thickness of from 0.35 to 0.45mm.

13. A case according to any preceding claim, wherein the second sub portion (531a) has a thickness of from 0.5 to 0.7mm.

14. A case according to any preceding claim, wherein the first engagement portion (531 c) extends beyond the wall portion in a direction that is generally orthogonal to a plane in which the first and second case portions are joined.

15. A battery pack comprising a plurality of bare cells housed within a case according to any preceding claim.

## Patentansprüche

1. Gehäuse für einen Batteriesatz, wobei das Gehäuse Folgendes umfasst:
einen ersten Gehäuseabschnitt (500), der mit einer ersten Eingriffsformation (530) versehen ist, und
einen zweiten Gehäuseabschnitt (600), der mit einer zweiten Eingriffsformation (630) versehen ist,
wobei:
die erste Eingriffsformation (530) die Form eines Flanschs annimmt, der angrenzend an einen Wandabschnitt des ersten Gehäuseabschnitts (500), aber mit Abstand von demselben längs wenigstens eines Teils seiner Länge angeordnet ist, um so einen Kanal zwischen denselben zu bilden,
die zweite Eingriffsformation (630) für eine Positionierung innerhalb des Kanals von dem zweiten Gehäuseabschnitt (600) aus vorspringt,
die eine der Eingriffsformationen (530, 630) mit einem Aufnahmeelement versehen ist, und
die andere der Eingriffsformationen (530, 630) mit einem Einsteckelement versehen ist, das dafür eingerichtet ist, in dem Aufnahmeelement positioniert zu werden, um die zwei Gehäuseabschnitte miteinander zu verbinden,
**dadurch** gekenntzeichnet, dass:
die erste Eingriffsformation (530) einen ersten Unterabschnitt (531c) und einen zweiten Unterabschnitt (531a) hat und der zweite Unterabschnitt (531a) eine Dicke hat, die größer ist als diejenige des ersten Unterabschnitts (531c), wobei der erste Unterabschnitt (531c) in einem distalen Bereich der ersten Eingriffsformation (530) angeordnet ist und der zweite Unterabschnitt (531a) in einem basalen Bereich der ersten Eingriffsformation (530) angeordnet ist.

2. Gehäuse nach Anspruch 1, wobei der erste Unterabschnitt (531c) dafür eingerichtet ist, die zweite Eingriffsformation (630) zu dem Kanal hin zu führen, und der zweite Unterabschnitt (531a) dafür eingerichtet ist, mit dem Wandabschnitt auf eine solche Weise zusammenzuwirken, dass die zweite Eingriffsformation (630) innerhalb des Kanals ergriffen wird.

3. Gehäuse nach Anspruch 1 oder 2, wobei der erste Unterabschnitt (531c) eine Führungsfläche hat, die dafür eingerichtet ist, durch die zweite Eingrifrsformation (630) in Kontakt genommen zu werden, wenn die zwei Gehäuseabschnitte zusammengebaut werden.

4. Gehäuse nach Anspruch 3, wobei die Führungsfläche in einer Richtung ausgerichtet ist, die geneigt ist im Verhältnis zu einer Ebene, in welcher der erste und der zweite Gehäuseabschnitt verbunden sind, und sich von dem Kanal aus zu einem inneren Abschnitt des ersten Gehäuseabschnitts (500) hin erstreckt.

5. Gehäuse nach einem der vorhergehenden Ansprüche, wobei die erste Eingriffsformation (530) einen dritten Unterabschnitt (531b) umfasst, der zwischen dem ersten und dem zweiten Unterabschnitt (531c, 531a) angeordnet ist.

6. Gehäuse nach Anspruch 5, wobei der dritten Unterabschnitt (531b) eine Führungsfläche hat, die in einer Richtung ausgerichtet ist, die geneigt ist im Verhältnis zu einer Ebene, in welcher der erste und der zweite Gehäuseabschnitt verbunden sind, und sich von dem Kanal aus zu einem inneren Abschnitt des ersten Gehäuseabschnitts (500) hin ersteckt

7. Gehäuse nach Anspruch 6, wobei die Dicke des dritten Unterabschnitts (531b) von einem Endabschnitt desselben, der angrenzend an den zweiten Unterabschnitt (531a) angeordnet ist, zu einem Endabschnitt desselben, der angrenzend an den ersten Unterabschnitt (531c) angeordnet ist, abnimmt.

8. Gehäuse nach einem der vorhergehenden Anspruch, wobei das Einsteckelement auf der zweiten Eingriffsformation (630) bereitgestellt wird und das Aufnahmeelement auf der ersten Eingriffsformation (530) bereitgestellt wird.

9. Gehäuse nach Anspruch 8, wobei das Aufnahmeelement in dem zweiten Unterabschnitt (531 a) bereitgestellt wird.

10. Gehäuse nach einem der vorhergehenden Anspruch, wobei das Aufinahmeelement eine Öffnung umfasst, die sich teilweise oder vollständig durch die Eingriffsformation, in der es angeordnet ist, erstreckt.

11. Gehäuse nach einem der vorhergehenden Ansprüche, wobei das Einsteckelement einen Vorsprung umfasst, der ein Profil hat, das einen im Allgemeinen dreieckigen, sägezaförmigen oder bogenförmigen Bestandteil umfasst.

12. Gehäuse nach einem der vorhergehenden Ansprüche, wobei der erste Unterabschnitt (531c) eine Dicke von 0,35 bis 0,45 mm hat.

13. Gehäuse nach einem der vorhergehenden Ansprüche, wobei der zweite Unterabschnitt (531a) eine Dicke von 0,5 bis 0,7 mm hat.

14. Gehäuse nach einem der vorhergehenden Ansprüche, wobei sich der erste Unterabschnitt (531c) in einer Richtung, die im Allgemeinen senkrecht zu einer Ebene ist, in welcher der erste und der zweite Gehäuseabschnitt verbunden sind, über den Wandabschnitt hinaus erstreckt.

15. Batteriesatz, der mehrere blanke Zellen umfasst, die innerhalb eines Gehäuses nach einem der vorhergehenden Ansprüche untergebracht sind.

## Revendications

1. Bac pour un bloc-batterie, ledit bac comprenant :
une première partie de bac (500), comportant une première structure d'engagement (530) ; et
une deuxième partie de bac (600), comportant une deuxième structure d'engagement (630) ;
dans lequel:
la première structure d'engagement (530) a la forme d'une bride située près d'une partie de paroi de la première partie du bac (500), mais espacée de celle-ci le long d'au moins une partie de sa longueur, de sorte à former un canal entre elles ;
la deuxième structure d'engagement (630) déborde de la deuxième partie du bac (600) en vue d'un positionnement dans le canal ;
une des structures d'engagement (530, 630) comporte un élément femelle ; et
l'autre structure des structures d'engagement (530, 630) comporte un élément femelle adapté pour être agencé dans l'élément femelle pour relier les deux parties du bac ;
**caractérisé en ce que**:
la première structure d'engagement (530) comporte une première partie auxiliaire (531c) et une deuxième partie auxiliaire (531a), la deuxième partie auxiliaire (531a) ayant une épaisseur supérieure à celle de la première partie auxiliaire (531c), la première partie auxiliaire (531c) étant agencée dans une région distale de la première partie d'engagement (530) et la deuxième partie auxiliaire (531a) étant agencée dans une région de base de la première partie d'engagement (530).

2. Bac selon la revendication 1, dans lequel la première partie auxiliaire (531c) est adaptée pour guider la deuxième partie d'engagement (630) vers le canal, la deuxième partie auxiliaire (531a) étant adaptée pour coopérer avec ladite partie de paroi, de sorte à saisir la deuxième partie d'engagement (630) dans le canal.

3. Bac selon les revendications 1 ou 2, dans lequel la première partie auxiliaire (531c) comporte une surface de guidage adaptée pour être contactée par la deuxième structure d'engagement (630) lors de l'assemblage des deux parties du bac.

4. Bac selon la revendication 3, dans lequel la surface de guidage est alignée dans une direction inclinée par rapport à un plan dans lequel les première et deuxième parties du bac sont reliées, et s'étend du canal vers une partie interne de la première partie du bac (500).

5. Bac selon l'une quelconque des revendications précédentes, dans lequel la première structure d'engagement (530) comprend une troisième partie auxiliaire (531b) agencée entre les première et deuxième parties auxiliaires (531c, 531a).

6. Bac selon la revendication 5, dans lequel la troisième partie auxiliaire (531b) comporte une surface de guidage alignée dans une direction inclinée par rapport à un plan dans lequel les première et deuxième parties du bac sont reliées, et s'étend du canal vers une partie interne de la première partie du bac (500).

7. Bac selon la revendication 6, dans lequel l'épaisseur de la troisième partie auxiliaire (531b) est réduite d'une région d'extrémité agencée près de la deuxième partie auxiliaire (531a) vers une région d'extrémité agencée près de la première partie auxiliaire (531c).

8. Bac selon l'une quelconque des revendications précédentes, dans lequel l'élément mâle est agencé sur la deuxième structure d'engagement (630), l'élément femelle étant agencé sur la première structure d'engagement (530).

9. Bac selon la revendications 8, dans lequel l'élément femelle est agencé dans la deuxième partie auxiliaire (531a).

10. Bac selon l'une quelconque des revendications précédentes, dans lequel l'élément femelle comprend une ouverture s'étendant en partie ou complètement à travers la structure d'engagement dans laquelle elle est agencée.

11. Bac selon l'une quelconque des revendications précédentes, dans lequel l'élément mâle comprend une saillie ayant un profil comprenant une composante généralement triangulaire, en dents de scie ou arquée.

12. Bac selon l'une quelconque des revendications précédentes, dans lequel la première partie auxiliaire (531c) a une épaisseur comprise entre 0,35 et 0,45mm.

13. Bac selon l'une quelconque des revendications précédentes, dans lequel la deuxième partie auxiliaire (531 a) a une épaisseur comprise entre 0,5 et 0,7mm.

14. Bac selon l'une quelconque des revendications précédentes, dans lequel la première partie auxiliaire (531c) s'étend au-delà de la partie de paroi, dans une direction généralement orthogonale à un plan dans lequel les première et deuxième parties du bac sont reliées.

15. Bloc-batterie, comprenant plusieurs cellules nues logées dans un bac selon l'une quelconque des revendications précédentes.
